# EUROPÄISCHE PATENTANMELDUNG

(11) **EP 3 937 155 A1**
(43) Veröffentlichungstag der Anmeldung: **12.01.2022**
(21) Anmeldenummer: 20184644.1
(22) Anmeldetag: 08.07.2020
(51) Int. Cl.: G09B 23/18, G09B 1/32, G09B 1/36, G09B 19/00

(54) **FUNKTIONSBAUSTEINE FÜR EIN DIDAKTISCHES LEHRMITTEL**

(71) Anmelder: Wuekro GmbH, 97424 Schweinfurt (DE)
(72) Erfinder: Büttner, Leonhard, 97422 Schweinfurt (DE)
(74) Vertreter: Götz, Georg Alois

(57) **Zusammenfassung**

Die Erfindung betrifft einen Funktionsbaustein (100) für ein didaktisches Lehrmittel zur Vermittlung von Grundwissen in der Elektrotechnik/Elektronik, wobei ein oder mehrere Funktionsbausteine (100) auf einer Trägereinrichtung (200) für eine elektrische/elektronische Schaltung kombiniert oder kombinierbar sind. Dabei weist der der Funktionsbaustein (100) folgendes auf:
- Mindestens eine Halteplatte (101) oder eine sonstige Haltevorrichtung.
- Mindestens ein elektrischer/elektronischer Aufbau (110), wobei der oder die elektrischen/elektronischen Aufbauten (110) auf der Halteplatte (101) oder der sonstigen Haltevorrichtung angeordnet oder anordenbar sind.
- Mindestens eine Kopplungseinrichtung (120) zum elektrisch leitenden Koppeln der Halteplatte (101) oder der sonstigen Haltevorrichtung und/oder des oder der elektrischen/elektronischen Aufbauten (110) mit der Trägereinrichtung (200) und/oder einem weiteren Funktionsbaustein (100).

Dabei weist die Halteplatte (101) oder sonstige Haltevorrichtung elektrisch leitendes Material auf, das integriert ist in und/oder eingebettet ist in und/oder aufgetragen ist auf ein nichtleitendes Trägermaterial.

Die Erfindung betrifft ferner ein Herstellungsverfahrung und einen Rahmen für einen Funktionsbaustein.

## Beschreibung

Die Erfindung betrifft einen Funktionsbaustein für ein didaktisches Lehrmittel zur Vermittlung von Grundwissen in der Elektrotechnik/Elektronik nach dem Oberbegriff des Anspruchs 1. Die Erfindung betrifft außerdem einen Rahmen, geeignet zur Aufnahme eines Funktionsbausteins nach dem Oberbegriff des Anspruchs 6. Die Erfindung betrifft außerdem ein Verfahren zum Herstellen eines Funktionsbausteins für ein didaktisches Lehrmittel nach dem Oberbegriff des Anspruchs 11.

Baukastensysteme können als didaktische Lehrmittel zur Vermittlung von Grundwissen in der Elektronik eingesetzt werden. In Baukastensystemen sind meist quaderförmige Steckbausteine zum Verbinden von zwei oder mehr Steckbuchsen mit integrierten aktiven und passiven elektronischen Bauteilen (z.B. Schaltern, Leuchtdioden, Potentiometern, Transistoren, Transistoren, Operationsverstärker, ...) mit Hilfe von Lamellensteckern auf einer Steckplatte zu verschiedenen Schaltungen kombinierbar. Hierfür weist die Steckplatte Steckbuchsen auf, wobei die Anordnung der Steckbuchsen einem konstanten Rastermaß, bspw. 19 Millimeter entspricht. Die Lamellenstecker sind in den Steckbausteinen ebenfalls mit einem Abstand entsprechend dem Rastermaß zueinander angeordnet. Je nach verwendetem elektronischem Bauteil sind die Steckbausteine bspw. als Zweipol, Dreipol, Vierpol oder Sechspol mit der entsprechenden Anzahl an Lamellensteckern ausgeführt.

Bislang wurde zur Herstellung eines Steckbausteins zunächst ein Unterboden auf die erforderliche Anzahl Lamellenstecker aufgeschraubt. Der Unterboden bildet zusammen mit einem quaderförmigen und unterseitig geöffneten Oberteil z.B. aus einem durchsichtigen Kunststoff ein Gehäuse, in dem die elektronischen Komponenten für die gewünschten Steckbausteine angeordnet sind.

Je nach zu fertigendem Steckbaustein werden dabei die einzelnen elektronischen Komponenten manuell angepasst untereinander verdrahtet und in dem Gehäuse mit den Lamellensteckern verlötet, bevor das Oberteil montiert wird. Aus dem Stand der Technik sind verschiedene Baukastensysteme für didaktische Lehrmittel bekannt.

Die DE 295 19 582 A1 betrifft einen Stecker als Halterung von Experimentierbauteilen zur Durchführung von Versuchen zur Elektrizität auf einer Steckplatte mit rechteckigen oder quadratischen Öffnungen. Eine Verriegelung verhindert, dass sich die Stecker von der Steckplatte lösen können.

Die DE 93 02 386 U1 zeigt Funktionsbausteine, die auf einer Montagefläche für Demonstrations- oder Schulungszwecke anordenbar sind. Die Funktionsbausteine weisen hierfür einen Grundkörper mit einer Ausnehmung an der Oberseite des Grundkörpers auf, wobei in der Ausnehmung Funktionseinheiten mit elektrischen Komponenten anordenbar sind.

Die US 2015 / 0 248 846 A1 betrifft ebenfalls einen Baukasten für didaktische Zwecke. Anstelle eines Stecksystems sind die Bausteine dafür ausgebildet, Puzzle-artig angelegt zu werden, um für Lehrzwecke elektrische Schaltungen aufbauen zu können. Auf Herstellungsprozesse wie Löten oder Verdrahten soll dabei verzichtet werden.

Die DE 30 31 621 A1 betrifft einen Baukasten mit einer Vielzahl an Steckbuchsen, die auf einer Oberseite einer Steckbuchsenleiste des Kastens angeordnet sind. Dabei sind, mit den Steckbuchsen geordnet und beschriftet, auf einer gemeinsamen gedruckten Schaltung angebrachte Widerstände oder Kondensatoren gemäß einer dezimal-geometrisch abgestuften, internationalen Normreihe angeordnet, wobei diese mit der Platine in einem Lötbad verfügt werden

Die Herstellung der im Stand der Technik gezeigten Steckbausteine ist sehr aufwendig und erfordert viele Bauteile und Herstellungsschritte. Insbesondere die Verdrahtung ist arbeitsintensiv in der Herstellung und in der Wartung.

Es ist die Aufgabe der vorliegenden Erfindung, die Nachteile aus dem Stand der Technik zu eliminieren und einen Funktionsbaustein bereitzustellen, welcher einen einfachen Aufbau mit geringer Teilezahl aufweist und einfach herzustellen ist und dennoch mit verschiedenen elektronischen Bausteinen für ein didaktisches Lehrmittel kombinierbar ist.

Die Aufgabe wird gelöst durch einen Funktionsbaustein gemäß Anspruch 1, einen Rahmen gemäß Anspruch 6 und ein Herstellungsverfahren gemäß Anspruch 11. Vorteilhafte Ausführungsformen sind in den Unteransprüchen beansprucht und werden nachfolgend näher erläutert. Nachstehend wird von elektrischen Aufbauten oder Komponenten gesprochen, auch wenn damit alle Aufbauten mit elektrischen und/oder elektronischen Komponenten oder Aufbauten abgedeckt sind.

Die Erfindung betrifft einen Funktionsbaustein für ein didaktisches Lehrmittel zur Vermittlung von Grundwissen in der Elektrotechnik. Dabei sind ein oder mehrere Funktionsbausteine auf einer Trägereinrichtung für eine elektrische Schaltung kombiniert oder kombinierbar, wobei der Funktionsbaustein folgendes aufweist:
- Mindestens eine Halteplatte oder eine sonstige Haltevorrichtung.
- Mindestens einen elektrischen Aufbau, wobei der oder die elektrischen Aufbauten auf der Halteplatte oder der sonstigen Haltevorrichtung angeordnet oder anordenbar sind.
- Mindestens eine Kopplungseinrichtung zum elektrisch leitenden Koppeln der Halteplatte oder der sonstigen Haltevorrichtung und/oder des mindestens einen elektrischen Aufbaus mit der Trägereinrichtung und/oder einem weiteren Funktionsbaustein.

Dabei weist die Halteplatte oder sonstige Haltevorrichtung elektrisch leitendes Material auf, welches integriert ist in und/oder eingebettet ist in und/oder aufgetragen ist auf ein nichtleitendes Trägermaterial. Das elektrisch leitende Material dient zum Ausbilden einer elektrisch leitenden Verbindung der elektrischen Aufbauten mit der Kopplungseinrichtung und/oder mit der Halteplatte oder der sonstigen Haltevorrichtung.

In anderen Worten, die Halteplatte oder sonstige Haltevorrichtung weist ein nichtleitendes Basismaterial oder Trägermaterial auf, bspw. glasfaserverstärktes, ausgehärtetes Kunstharz. Darin oder darauf sind elektrisch leitende Verbindungen, bspw. mit Kupfer fest integriert. Auf der Halteplatte sind aktive und passive elektrische oder elektronische Komponenten für elektrische oder elektronische Aufbauten anordenbar, bspw. zur Ausbildung von Schaltern, Leuchtdioden, Potentiometern, Transistoren, Transistoren, Operationsverstärker, PTC-Thermistoren, NTC-Thermistoren, etc.... Kopplungseinrichtungen, bspw. Lamellenstecker oder sonstige elektrisch leitfähige Anschlüsse können, vorzugsweise über eine gemeinsame Trägereinrichtung, mit mehreren weiteren Funktionsbausteinen eine elektrische oder elektronische Schaltung realisieren.

Durch die Haltevorrichtung mit bereits integrierten elektrischen Leitungen können nicht leitende Bodenplatten aus dem Stand der Technik ersetzt werden. Bislang erforderliche Verdrahtungsarbeit zum Verbinden bspw. der elektrischen Komponenten des elektrischen Aufbaus mit den Kopplungselementen kann entfallen. Durch den Wegfall von Verdrahtungen sind die zu realisierenden Funktionsbausteine deutlich langlebiger. Die Herstellung notwendiger Komponenten für die Funktionsbausteine kann automatisiert und die verbleibende manuelle Endmontage vereinfacht werden. Dadurch können die Anschaffungskosten für Funktionsbausteine und die Kosten für die Beschaffung didaktischer Lehrmittel reduziert werden.

In einer bevorzugten Ausführungsform der Erfindung ist die Halteplatte oder sonstige Haltevorrichtung als oder mit einer Platine und/oder Leiterplatte und/oder gedruckten Schaltung ausgebildet.

Platinen sind als Massenprodukt kostengünstig in einem Nutzen herstellbar. Ein Nutzen ist in der elektrischen Verbindungstechnik allgemein eine Gesamtplatine, die aus einzelnen Platinen besteht und noch nicht vereinzelt ist. Hierbei kann die Gesamtplatine mehrmals identische Platinen mit gleichem Aufbau enthalten oder es können in einem Nutzen Einzelplatinen mit verschiedenen Schaltungsfunktionen angeordnet sein.

In einer vorteilhaften Weiterbildung weist die Halteplatte oder sonstige Haltevorrichtung eine Bestückungsseite zum Anordnen des oder der elektrischen Aufbauten und eine Lötseite zum Verlöten des oder der elektrischen Aufbauten mit der Halteplatte oder sonstigen Haltevorrichtung und/oder der Kopplungseinrichtung auf.

Die Platine ist lötbadfähig. Dafür kann sie einen Lötstopplack oder eine sonstige Beschichtung aufweisen, die eine Benetzung mit Lötmittel verhindert. Für eine elektrisch leitfähige Verbindung zwischen den Aufbauten und den in der Platine integrierten elektrischen Leitungen verbleiben auf der Einzelplatine bzw. dem Nutzen Lötpads oder sonstige lötfähige Anschlussflächen. Eine Bestückungsseite der Platine kann mit einer oder mehreren Komponenten für elektrische Aufbauten bestückt werden. Die elektrischen Aufbauten können an der Oberfläche der Bestückungsseite anliegen oder die Platine mit Anschlussleitungen durchsetzen, sodass sie von einer Lötseite der Platine für ein fließfähiges Lötmittel zugänglich sind. In anderen Worten, durch eine Einsteckmontage ist eine Vormontageanordnung zwischen einer Einzelplatine bzw. einem Nutzen und bedrahteten Aufbauten realisierbar, die anschließend bspw. in einem Lötbad schnell und effizient mit der Platine verfügt werden kann. Dadurch können elektrische Aufbauten zu Lehrzwecken mit anschaulichen mechanischen Komponenten, bspw. mechanischen Tast- oder Kippschaltern realisiert werden, die dann kostengünstig über eine Platine zu einem Funktionsbaustein kombinierbar sind. Das Verlöten ergänzt anschließend die fehlenden elektrisch leitenden Verbindungen.

Bevorzugt weist die Platine Durchgänge zum Durchführen der Kopplungseinrichtungen auf.

Die Durchgänge sind vorzugsweise durch Anbohren der Platine realisiert. Die Durchgänge können Kopplungselemente aufnehmen, vorzugsweise Lamellenstecker oder sonstige Steckverbinder. Da die Lamellenstecker komplementär zu dem Rastermaß der Trägereinrichtung bzw. der Steckplatte angeordnet sein müssen, sind vorzugsweise auch die Durchgänge der Platine entsprechend dem Rastermaß der Trägereinrichtung angeordnet. Entsprechend des montierten elektrischen Aufbaus weist die Platine 2-6 Durchgänge auf

Vorzugsweise ist die Leiterplatte in einem Rahmen oder sonstigen Gehäuse angeordnet. Der Rahmen kann hierfür entsprechend der nachfolgend beschriebenen Ausführungsformen ausgebildet sein.

Eigenständiger Erfindungsschutz wird beansprucht für einen Rahmen mit quaderförmiger oder prismatischer Grundform, der geeignet ist zur Aufnahme eines Funktionsbausteins, insbesondere eines Funktionsbausteins in einer beispielhaften erfindungsgemäßen Ausführung, für ein didaktisches Lehrmittel zur Vermittlung von Grundwissen in der Elektronik oder Elektrotechnik. Dabei sind ein oder mehrere Funktionsbausteine auf einer Trägereinrichtung für eine elektrische oder elektronische Schaltung kombiniert oder kombinierbar. Ein Funktionsbaustein für einen solchen Rahmen weist dabei folgendes auf:
- Mindestens einen elektrischen oder elektronischen Aufbau.
- Mindestens eine Kopplungseinrichtung zum elektrisch leitenden Koppeln des mindestens einen elektrischen oder elektronischen Aufbaus mit der Trägereinrichtung und/oder einem weiteren Funktionsbaustein.
- Optional eine Halteplatte oder Haltevorrichtung. Dabei weist die Halteplatte oder sonstige Haltevorrichtung elektrisch leitendes Material auf, welches integriert ist in und/oder eingebettet ist in und/oder aufgetragen ist auf ein nichtleitendes Trägermaterial.

Der Rahmen weist an mindestens zwei, vorzugsweise gegenüberliegenden, Wandungen, vorzugsweise deckungsgleiche, Ausnehmungen auf. In anderen Worten, das Gehäuse ist quasi rahmenartig mit einer vorder- und rückseitig offenen Gehäusestruktur ausgebildet.

Im Gegensatz zu im Stand der Technik bekannten Gehäusen für Funktionsbausteine, welche die elektrischen Komponenten vollständig umgeben, sind wenigstens zwei Seitenwandungen des quaderförmigen oder prismatischen Grundkörpers im Wesentlichen vollständig entfernt. Die Ausnehmungen verbessern die Zugänglichkeit für Montage- und Wartungsvorgänge. Durch die Ausnehmungen stehen Sichtfenster bereit, sodass der Rahmen nicht mehr zwingend aus transparentem Material gefertigt sein muss. Verschiedenfarbige Funktionsbausteine sind nunmehr denkbar. Die Ausnehmungen verbessern auch die Handhabung während Experimenten zu Lehrzwecken, sofern der elektronische Aufbau des Funktionsbausteins bspw. ein Sensorelement (PTC-Thermistore, NTC-Thermistor) aufweist. Die Rahmen sind grundsätzlich im 3D-Druck und/oder Spritzguss herstellbar.

Vorzugsweise ist der Rahmen als U-Profilträger ausgebildet, wobei der oder die elektrischen Aufbauten ganz oder teilweise in einem Rahmenzwischenraum angeordnet oder anordenbar sind, der durch einen U-Mittelabschnitt und zwei U-Schenkel des U-Profilträgers begrenzt ist.

Der U-Mittelabschnitt bildet dabei eine oberseitige oder von einer koppelbaren Trägereinrichtung abgewandte Begrenzung des Rahmenzwischenraums. Die U-Schenkel erstrecken sich davon vorzugsweise rechtwinklig nach unten oder in Richtung einer koppelbaren Trägereinrichtung. Die U-Schenkel können also parallel zueinander verlaufen. Alternativ kann sich der Abstand der U-Schenkel ausgehend von dem U-Mittelabschnitt zu den Schenkelenden hin vergrößern oder verkleinern. Zwischen den Schenkelenden, also unterseitig oder der koppelbaren Trägereinrichtung zugewandt, weist der Rahmen eine Öffnung auf. U-Mittelabschnitt und Schenkel können Ausnehmungen oder sonstige Elemente zur Kopplung weiterer Bauteile aufweisen. Zu den Vorteilen eines U-Profilträgers zählt ein sehr gutes Verhältnis von Festigkeit und Gewicht. Der Materialaufwand zur Fertigung des Rahmens kann damit reduziert werden, ohne die Festigkeit des Funktionsbausteins zu beeinträchtigen.

In einer bevorzugten Weiterbildung der Erfindung weist der U-Mittelabschnitt einen oder mehrere Durchgänge zur lösbaren Montage eines Rahmenoberteils mit dem Rahmen oder dem sonstigen Gehäuse auf.

Die Weite der Ausnehmungen im U-Mittelabschnitt ist vorzugsweise so dimensioniert, dass Montagewerkzeuge wie bspw. Steckschlüssel für den Zusammenbau des Funktionsbausteins durchführbar sind. Die lösbare Montage des Rahmenoberteils ist bspw. als Steckverschluss oder Schnappverschluss realisierbar.

Es ist vorteilhaft, wenn die U-Schenkel des U-Profilträgers an ihren Schenkelenden einen, vorzugsweise rechtwinklig, abgewinkelten Bereich aufweisen und die abgewinkelten Bereiche jeweils einen Durchgang zum Durchführen der Kopplungseinrichtungen aufweisen.

Für einen Zweipol-Funktionsbaustein weist ein abgewinkelter Bereich eine Durchführung auf, für einen Vierpol-Funktionsbaustein zwei Durchführungen, für einen Sechspol-Funktionsbaustein drei Durchführungen. Die Schenkelenden sind nach innen abgewinkelt und damit einander zugewandt. Die Schenkelenden sind zum Unter- und/oder Hintergreifen der Halteplatte oder sonstigen Haltevorrichtung ausgebildet.

Vorzugsweise weist die Kopplungseinrichtung des Funktionsbausteins einen der Trägereinrichtung zugeordneten Kopplungsabschnitt, einen dem elektrischen Aufbau zugeordneten Befestigungsabschnitt und einen dazwischenliegenden Mittelabschnitt auf, wobei der Rahmen eine Vertiefung oder eine sonstige Einrichtung zur verdrehsicheren Aufnahme des Mittelabschnitts aufweist.

Eigenständiger Erfindungsschutz ist ferner beansprucht für ein Verfahren zum Herstellen eines Funktionsbausteins für ein didaktisches Lehrmittel, insbesondere für ein didaktisches Lehrmittel zur Vermittlung von Grundwissen in der Elektrotechnik oder Elektronik, wobei ein oder mehrere Funktionsbausteine auf einer Trägereinrichtung für eine elektrische Schaltung kombiniert oder kombinierbar sind, insbesondere für einen Funktionsbaustein in einer bereits beschriebenen Ausführung und/oder mit einem Rahmen in einer bereits beschriebenen Ausführung. Das Verfahren weist dabei folgende Schritte auf:
a) Bereitstellen mindestens einer Halteplatte oder sonstigen Haltevorrichtung.
b) Anordnen von mindestens einem elektrischen oder elektronischen Aufbau auf der Halteplatte oder sonstigen Haltevorrichtung.
c) Verbinden des elektrischen oder elektronischen Aufbaus mit der Halteplatte oder sonstigen Haltevorrichtung.
d) Vorzugsweise Befestigen in einem Rahmen des Funktionsbausteins.

In einer bevorzugten Ausführung für mehrere zu fertigende Funktionsbausteine wird im Rahmen des Verfahrens ein Grundkörper bereitgestellt, der eine oder mehrere miteinander verbundene Halteplatten oder sonstigen Haltevorrichtungen aufweist.

Die Vereinzelung des Grundkörpers in die jeweiligen einzelnen Halteplatten oder sonstigen Haltevorrichtungen kann grundsätzlich vor oder nach jedem Verfahrensschritt durchgeführt werden. Vorzugsweise erfolgt dies durch Brechen des Grundkörpers an Sollbruchstellen, bspw. Trennkerben. Durch die Anordnung mehrerer Einzelplatinen zu einem Nutzen ist es möglich, viele Einzelplatinen gleichzeitig mit gleichen oder auch unterschiedlichen elektrischen Aufbauten zu bestücken. Dadurch können eine Vielzahl an Funktionsbausteinen quasi im Nutzen hergestellt werden. Ein Nutzen kann dabei mit Multifunktionsplatinen aufgebaut sein. Diese Multifunktionsplatinen sind dabei so konstruiert und aufgebaut, dass der gleiche Platinentyp ggf. mit geringfügigen Modifikationen beim Anordnen der einzelnen Aufbauten für verschiedene Funktionsbausteine verwendet werden kann. So kann eine Multifunktionsplatine bspw. durch Einlöten einer zusätzlichen Brücke in Verbindung mit einem Tast- oder Kippschalter sowohl einen Öffner, einen Schließer als auch einen Umschalter realisieren.

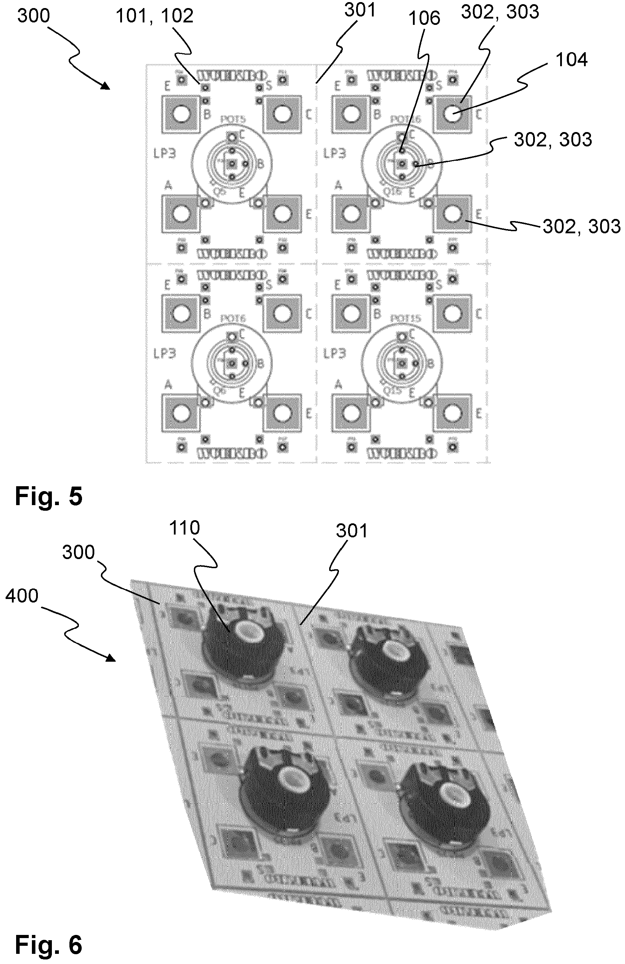

In anderen Worten, mit fünf verschiedenen Multifunktionsplatinen, also mit fünf verschiedenen Nutzen (vgl. Figur 5) sind ausreichend verschiedene Steckbausteine, bspw. 13 Stück, für einen Baukasten realisierbar. Durch ein solches Konzept der "Mehrfachroutung" besteht die Möglichkeit, auf jeden der fünf verschiedenen Platinen-Nutzen LP01-05 unterschiedliche elektronische Bauteile bestücken zu können. Durch unterschiedliche Layouts der Leiterbahnen auf der Platine ist es möglich verschiedenartige Bauelemente auf einer Platine zu positionieren. Z.B.:
- Erster Multifunktionsnutzen mit erster Multifunktionsplatine (LP01): Widerstände, Dioden, LED, Fotowiderstand (LDR), spannungsabhängiger Widerstand (VDR), PTC-Thermistoren, NTC-Thermistoren.
- Zweiter Multifunktionsnutzen mit zweiter Multifunktionsplatine (LP02): Kondensatoren und Elkos
- Dritter Multifunktionsnutzen mit dritter Multifunktionsplatine (LP03) Transistoren und Thyristoren
- Vierter Multifunktionsnutzen mit vierter Multifunktionsplatine (LP04): Taster, Schalter, Umschalter, Öffner und Schließer
- Fünfter Multifunktionsnutzen mit fünfter Multifunktionsplatine (LP05): Potentiometer und Dimmer

Vorzugsweise erfolgt das Verbinden des oder der elektrischen Aufbauten mit der Halteplatte oder sonstigen Haltevorrichtung durch einen Lötvorgang und/oder einen sonstigen Fügevorgang.

Das Verbinden des oder der elektrischen Aufbauten mit der Halteplatte oder der sonstigen Haltevorrichtung kann in einem Lötbad erfolgen.

Hierfür weist die Halteplatte oder sonstige Haltevorrichtung eine Beschichtung auf, die ein unerwünschtes Anhaften von Lötmittel verhindert. Lötpads, also einzelne lötfähige Anschlussflächen sind von der Beschichtung ausgespart, wobei das Lötbett auch eine elektrische Verbindung zu den Lamellensteckern ausbildet. Eine Bestückungsseite wird mit Komponenten wie Schaltern oder Brücken bestückt, wobei Anschlussdrähte oder sonstige Anschlusselemente die Halteplatte oder sonstige Haltevorrichtung entlang von Durchkontaktierungsbohrungen durchsetzen können, sodass die Anschlussdrähte oder sonstigen Anschlusselemente von einer Lötseite für ein Lötmittel zugänglich sind. In einem Lötbad oder einer vergleichbaren Lötvorrichtung (bspw. Schwalllöten oder Wellenlöten) erfolgt das Fügen und die Durchkontaktierung. In anderen Worten, das Lötbett stellt eine leitende Verbindung zwischen den elektronischen Aufbauten (Bauteilen) und der Platine her. Insofern werden die Lötpads für die Lamellenstecker nicht im Lötbad benetzt, sondern stellen lediglich eine elektrisch leitenden Kontakt für die Lamellenstecker dar, dessen Verwirklichung durch die mechanische Verschraubung der Lamellenstecker mit der Platine erzielt wird.

In einer optionalen Weiterbildung des Verfahrens wird vor dem Verbinden des oder der elektrischen Aufbauten mit der Halteplatte oder sonstigen Haltevorrichtung eine Vormontageanordnung durch Anordnen mehrerer elektrischer Aufbauten auf dem Grundkörper bereitgestellt.

Weitere Einzelheiten, Merkmale, Merkmals(unter) kombinationen, Vorteile und Wirkungen auf der Basis der Erfindung ergeben sich aus der nachfolgenden Beschreibung eines bevorzugten Ausführungsbeispiels *{bzw. -beispiele}* der Erfindung und den Zeichnungen. Diese zeigen in
- Fig. 1: einen beispielhaften erfindungsgemäßen Funktionsbaustein in perspektivischer Darstellung, in
- Fig. 2: eine beispielhafte erfindungsgemäße Steckanordnung in perspektivischer Darstellung, in
- Fig. 3a: einen beispielhaften erfindungsgemäßen Rahmen für einen Zweipol-Funktionsbaustein in einer perspektivischen Darstellung, in
- Fig. 3b: einen beispielhaften erfindungsgemäßen Rahmen für einen Vierpol-Funktionsbaustein in einer perspektivischen Darstellung, in
- Fig. 4a: einen beispielhaften erfindungsgemäßen Funktionsbaustein in einer ersten perspektivischen Darstellung, in
- Fig. 4b: denselben beispielhaften erfindungsgemäßen Funktionsbaustein in einer zweiten perspektivischen Darstellung, in
- Fig. 5: einen beispielhaften erfindungsgemäßen Grundkörper in einer perspektivischen Darstellung und in
- Fig. 6: eine beispielhafte erfindungsgemäße Vormontageanordnung in einer perspektivischen Darstellung.

Die Figuren sind lediglich beispielhafter Natur und dienen nur dem Verständnis der Erfindung. Die gleichen Elemente sind mit denselben Bezugszeichen versehen.

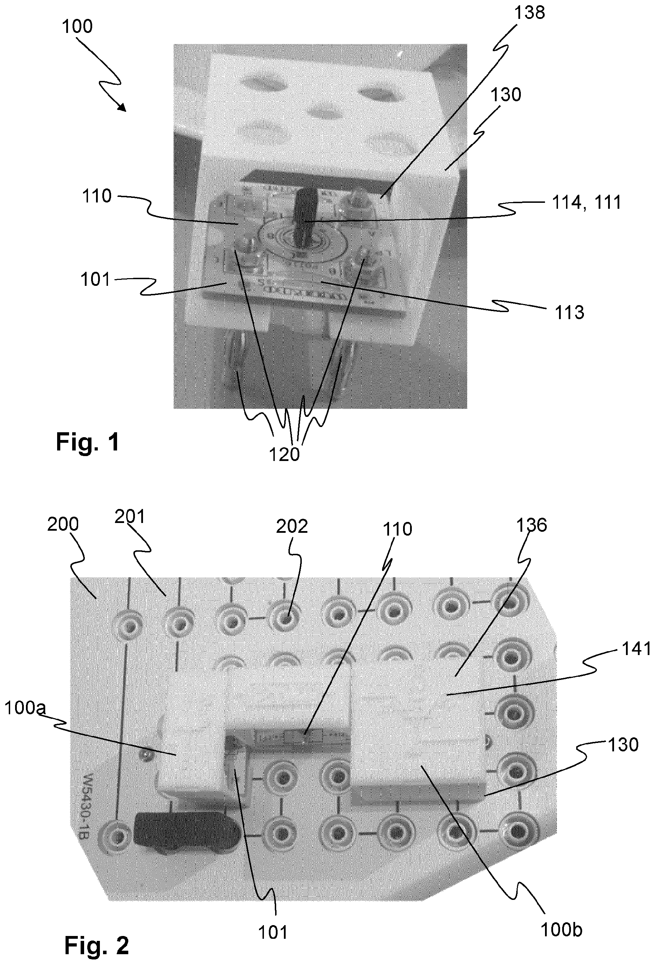

Fig. 1 zeigt eine erste Ausführungsform eines Funktionsbausteins als Steckbaustein 100. Auf einer Platine 101 sind für einen elektrischen Aufbau 110 Bedienelemente 111 und entsprechende elektrische, elektronische, mechanische, optische und/oder sensorische Funktionseinheiten 114 für Schalter, Leuchtdioden, Potentiometer, Transistoren, Transistoren, Operationsverstärker, PTC-Thermistoren, NTC-Thermistoren, etc.... angeordnet. Für eine Kopplung mittels Steckverbindung mit einer Trägereinrichtung 200 (vgl. Fig. 2) weist der Steckbaustein 100 Lamellenstecker 120 auf. Lamellenstecker sind meist genormte Massenartikel. Der gezeigte Steckbaustein 100 benötigt entsprechend des eingesetzten Aufbaus 110 drei Lamellenstecker 120 und ist daher in einem Rahmen 130 (gezeigt ohne Rahmenoberteil 136, vgl. Fig. 2) und mit einer Platine 101 für einen Vierpol-Steckbaustein 100 angeordnet. Der elektrische Aufbau 110 und die Platine 101 sind in einem Zwischenraum 138 angeordnet, der durch einen Rahmen 130 mit einem U-Profil begrenzt wird. Der Steckbaustein 100 kann als Surface-mounted device (SMD, deutsch oberflächenmontiertes Bauelement) realisiert sein. Zusätzliche Brücken 113 können die Anordnung ergänzen, sodass zusätzliche elektrische Leitungen verlegt oder einzelne Teilschaltkreise kurz geschlossen werden können. Zweipol-Steckbausteine 100 werden für Öffner, Schließer, Widerstände, Kondensatoren oder LED verwendet. Vierpolsteckbausteine 100 werden (ggf. als Dreipol) für Potentiometer oder Transistoren verwendet. Sechspol-Steckbausteine werden für Operationsverstärker und integrierte Schaltungen verwendet.

Fig. 2 zeigt eine Steckanordnung mit zwei Zweipol-Steckbausteinen 100a und einem Vierpol-Steckbaustein 100b. Die Trägereinrichtung 200 ist wie bei Baukästen für didaktische Lehrsysteme üblich als Steckplatte 201 mit Steckbuchsen 202 ausgebildet, wobei die Steckbuchsen 202 zur Aufnahme von Lamellensteckern 120 ausgebildet sind. Der Rahmen 130 weist ein Rahmenoberteil 136 auf, welches mit einem Ersatzschaltbild 141 der Funktionseinheit des Steckbausteins 100 bedruckbar ist. Dabei ist auch das Ersatzschaltbild 141 als Kontur oder Prägung des Rahmenoberteils 136 ausbildbar.

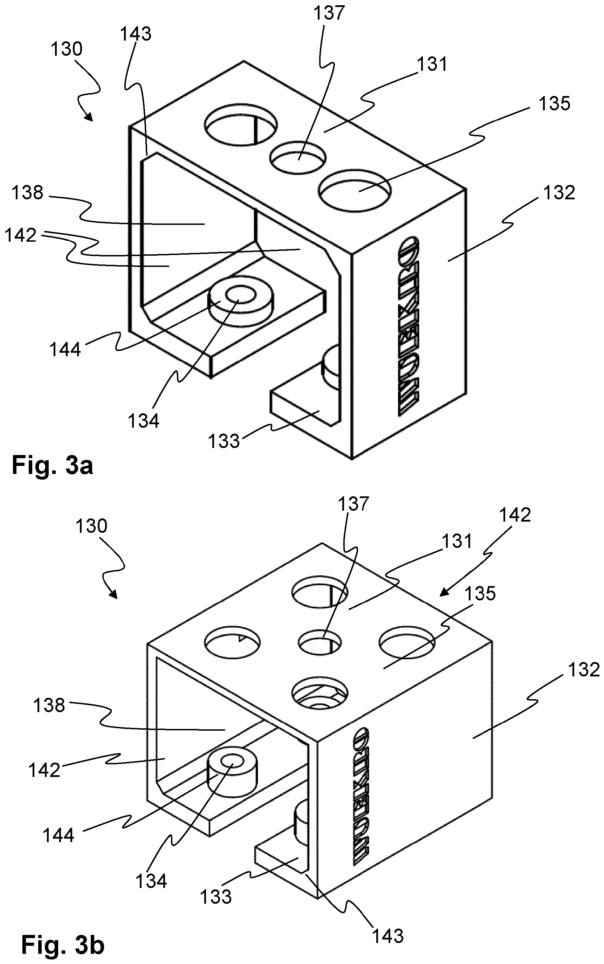

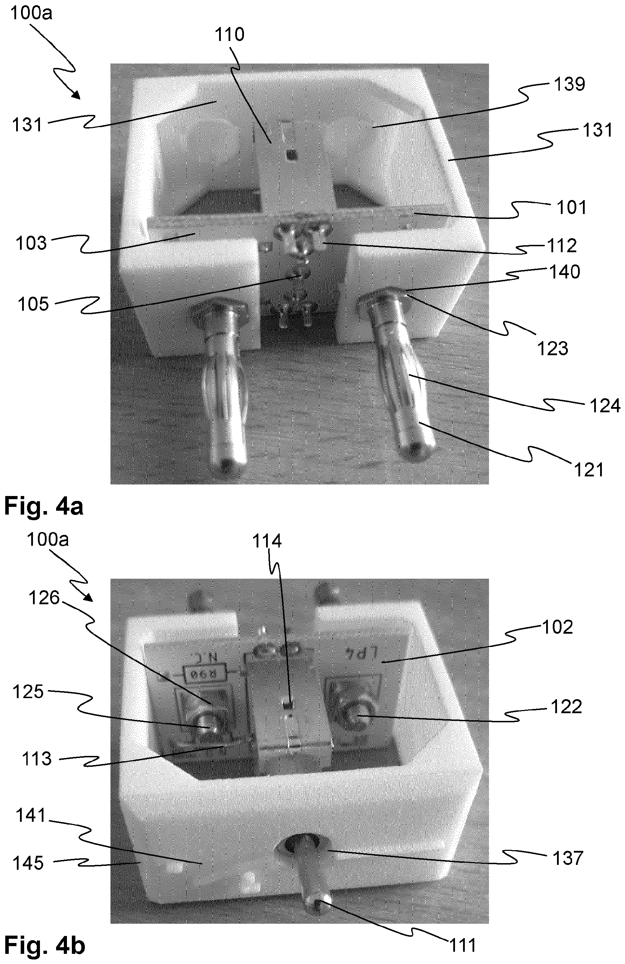

Fig. 3a zeigt einen Rahmen 130 für einen Zweipolsteckbaustein 100 (vgl. Fig. 4a). Der Rahmen 130 ist ein U-Profilträger, wobei elektrische Aufbauten 110 ganz oder teilweise in dem Rahmenzwischenraum 138 angeordnet oder anordenbar sind, der durch den U-Mittelabschnitt 131 und zwei U-Schenkel 132 des U-Profilträgers begrenzt ist. Der Rahmen 130 weist daher an zwei gegenüberliegenden Wandungen, d.h. bspw. vorder- und rückseitig, deckungsgleiche im Wesentlichen rechteckige Ausnehmungen auf. Der U-Mittelabschnitt 131 weist zwei Durchgänge 135 auf. In diese Durchgänge 135 ist sind Steck- oder Schnapp- und/oder Rastelemente 139 (vgl. Fig. 4a) zur lösbaren Montage eines Rahmenoberteils 136 (vgl. Fig. 2) mit dem U-Profilträger einschiebbar. Die U-Schenkel 132 des U-Profilträgers weisen einen rechtwinklig abgewinkelten Bereich 133 auf. Die abgewinkelten Bereiche 133 weisen jeweils einen Durchgang 134 zum Durchführen der Lamellenstecker 120 auf. Die Durchgänge 135 des U-Mittelabschnitts 131 und die Durchgänge 134 der abgewinkelten Bereiche 133 sind koaxial und/oder in einer Flucht angeordnet. Dadurch sind Befestigungsmittel, wie z.B. Muttern 126 mittels eines Steckschlüssels durch die Durchgänge 135 des U-Mittelabschnitts 131 erreichbar, was die Montage vereinfacht. Die Durchgänge 134 der abgeknickten Bereiche 133 sind durch einen Ringvorsprung verlängert, sodass sich eine Ringauflage 144 für die Platine 101 (vgl. Figur 4a) bildet. Durch das U-Profil ist der elektrische Aufbau 110 von allen Seiten einsehbar, sodass die Ausrichtung auf einer Steckplatte 201 keine Rolle spielt. Der Rahmen 130 kann ferner im U-Mittelabschnitt eine weitere Durchführung 137 für ein Bedienelement, bspw. einen Kippschalthebel aufweisen. Zusätzliche Aussteifungen 143 können im Bereich rechter Winkel des Rahmen 130 vorgesehen sein.

Fig. 3b zeigt einen Rahmen 130 für einen Vierpolsteckbaustein 100. Im Unterschied zu dem Rahmen für den Zweipol-Steckbaustein 100 (vgl. Fig. 3a) weist der U-Mittelabschnitt 131 vier Durchgänge 135 auf. Die abgewinkelten Bereiche 133 weisen jeweils zwei Durchgänge 134 zum Durchführen der Lamellenstecker 120 auf. Der Zwischenraum 138, der durch den Rahmen 130 des Vierpol-Steckbausteins begrenzt ist, weist im Wesentlichen das doppelte Volumen des Zwischenraums 138 auf, der durch den Rahmen 130 des Zweipol-Steckbausteins begrenzt ist

Fig. 4a und Fig. 4b zeigen unterschiedliche Perspektiven desselben Zweipol-Steckbausteins 100 mit einem Kippschalter und werden daher gemeinsam beschrieben. Der elektrische Aufbau 110 entspricht einem Einschalter oder Schließer zum Bereitstellen von Kontaktverbindungen für elektrischen Stromfluss. Die mechanische bzw. elektrische Funktionseinheit 114 des Schließers ist über einen Bedienhebel 111 eines Kippschalters bedienbar. Die Funktionseinheit 114 ist auf der Bestückungsseite 102 der Platine 101 angeordnet, sodass die Anschlussdrähte oder Anschlusspins Bohrungen der Platine 101 durchsetzen und an einer Lötseite 103 vorstehen. Die Lötseite 103 weist Lötpads auf, die durch Leiterbahnen auf oder in der Platine 101 miteinander verbunden sind, wobei die Leiterbahnen in nicht leitfähiges Trägermaterial eingebettet sind. Die Leiterbahnen sind als Aufdruck auf einer lötbadfähigen Lackschicht visualisierbar. Durch Brücken 113 können zusätzliche leitende Verbindungen geschaffen werden. Nicht alle Kontakte müssen für die Montage der Aufbauten 110 verwendet werden. Nach dem Eintauchen der Lötseite 103 in ein Lötbad bilden die Anschlussdrähte zusammen mit dem Lötmittel elektrisch leitende Lötstellen 105 aus. Dadurch wird die Funktionseinheit 114 mit der Platine 101 verfügt. Gleichzeitig wird eine elektrisch leitende Verbindung zwischen der Funktionseinheit 114, also den Anschlusspins 112, und den in die Platine 101 integrierten Verbindungen hergestellt. Zur Ausbildung des Schließers als vollständiger elektrischer Aufbau 110 ist auf der Bestückungsseite 102 der Platine 101 eine Brücke 113 zu ergänzen. Die Brücke 113 legt fest, welcher Anschlusspin 112 der Funktionseinheit 114 eine elektrisch leitende Verbindung mit einem Lamellenstecker 120 realisiert. Durch die Verwendung von Brücken 113 können mit einer Multifunktionsplatine 101 und einer Funktionseinheit 114 drei verschiedene Steckbausteine 100, nämlich bspw. ein Öffner, ein Schließer und ein Umschalter realisiert werden. Mit fünf verschiedenen Multifunktionsplatinen 101, also mit fünf verschiedenen Nutzen 300 (vgl. Figur 5) sind ausreichend verschiedene Steckbausteine 100, bspw. 13 Stück, für einen Baukasten realisierbar. Das Ersatzschaltbild 141 des Funktionsbausteins 100 ist als Druck, Kontur oder Prägung des Rahmenoberteils 136 ausgebildet. Zum Abnehmen des Rahmenoberteils 136 ist zwischen Rahmenoberteil 136 und U-Profilträger ein Schlitz 145 für einen Fingernagel oder ein sonstiges Stemmelement angeordnet.

Die Kopplungseinrichtung ist als Lamellenstecker 120 realisiert. Ein Lamellenstecker 120 weist einen Lamellenabschnitt 121 mit Lamellen 124 für eine Steckverbindung mit einer Steckbuchse 202 (vgl. Figur 2) und einen Befestigungsabschnitt 122 zum Verbinden der Platine 101, des Rahmens 130 und ggf. elektrischer Aufbauten 110 aus. Zwischen dem Lamellenabschnitt 121 und dem Befestigungsabschnitt 122 ist ein Mittelabschnitt 123 angeordnet, der als Verdickung mit einer Sechskantaußenkontur ausgebildet ist. Diese Kontur ist ganz oder teilweise in einer Einsenkung 140 der abgewinkelten Bereiche 133 des Rahmens 130 versenkbar. Die Lamellenabschnitte 121 bleiben im Mittelabschnitt 123 verdrehbar gelagert. Sechskantmuttern 126 sind auf einen Außengewindeabschnitt 125 des Befestigungsabschnitts 122 aufschraubbar. Die Muttern 126 sind mittels Ringschlüssel über Durchgänge 135 im U-Mittelabschnitt 131 des Rahmens 130 erreichbar.

Figur 5 zeigt einen Nutzen 300 aus vier Einzelplatinen 101, wobei zwischen den Einzelplatinen Trennlinien 301, insbesondere Sollbruchkanten verlaufen. Die Bestückungsseite 102 des Nutzens kann mit Informationen zu den elektronischen Aufbauten 110 bedruckt werden, wobei beim Bedrucken auch in den Nutzen 300 intergierte elektrische Leitungen visualisiert werden können. Im Nutzen 300 sind bereits Bohrungen 106 für Anschlusspins oder Einsteckelemente 112 vorgebohrt, ebenso wie Durchgänge 104 zum Durchführen der Lamellenstecker 120 (vgl. Fig. 4a). Im Bereich der Durchgänge 104 und im Bereich der Bohrungen 106 ist die Beschichtung der Platine 101 zur Ausbildung von Lötpads 302 oder sonstigen elektrisch leitenden Kontaktflächen 303 ausgespart. Ein Nutzen 300 weist typischerweise 20-30 Einzelplatinen 101 auf.

Figur 6 zeigt eine Vormontageanordnung 400 mit vier Potentiometern als elektrischer Aufbau 110 auf einem Nutzen 300 mit vier Einzelplatinen 101. Durch die Anordnung mehrerer Einzelplatinen 101 zu einer Gesamtanordnung als eine Platte ist es möglich, viele Einzelplatinen 101 gleichzeitig mit gleichen oder auch unterschiedlichen elektrischen Aufbauten 110 zu bestücken. Eine solche Vormontageanordnung 400 kann mit der Lötseite 103 und/oder mit der Bestückungsseite 102 in ein Lötbad getaucht werden, sodass die aufgesteckten Potentiometer oder andere Aufbauten 110 mit der Platine 101 verfügt werden. In diesem Schritt können viele Vormontageanordnungen 400 gleichzeitig verfügt werden und sind dann bereits einzeln einbaufertig. Nach dem Vereinzeln der Platinen 101, bspw. durch Nutzentrenner kann die verfügte Anordnung in einen Rahmen 130 eingesetzt und mit Lamellensteckern 120 verschraubt werden (vgl. Fig. 4a, 4b). Das Lötbett der Platine 101 kann außerdem eine elektrische Verbindung zu den Lamellensteckern 120 ausbilden. Die Herstellung der Steckbausteine 100 für das Stecksystem kann somit beschleunigt sowie automatisiert werden. Die Anzahl der insgesamt benötigten Komponenten können verringert und damit die Kosten zur Herstellung des didaktischen Lehrmittels reduziert werden.

### Bezugszeichenliste

- 100: Funktionsbaustein, insbesondere Steckbaustein
- 101: Halteplatte, insbesondere Platine
- 102: Bestückungsseite
- 103: Lötseite
- 104: Durchgang für Kopplungselement
- 105: Lötstellen
- 106: Bohrung für Einsteckelement oder Anschlusspin
- 110: elektrischer/elektronischer Aufbau
- 111: Bedienelement
- 112: Einsteckelement, Anschlusspin
- 113: Brücke
- 114: Funktionseinheit, optisch, mechanisch, elektronisch, sensorisch
- 120: Kopplungseinrichtung
- 121: Kopplungsabschnitt, insbesondere Lamellenstecker
- 122: Befestigungsabschnitt
- 123: Mittelabschnitt
- 124: Lamellen
- 125: Außengewindeabschnitt
- 126: Mutter
- 130: Rahmen
- 131: U-Mittelabschnitt
- 132: U-Schenkel
- 133: abgewinkelte Bereiche
- 134: Durchgang im abgewinkelten Bereich
- 135: Durchgang im U-Mittelabschnitt
- 136: Rahmenoberteil
- 137: Durchführung für Bedienelement
- 138: Rahmenzwischenraum
- 139: Oberteilrastelemente
- 140: Einsenkung
- 141: Ersatzschaltbild
- 142: Ausnehmung
- 143: Aussteifung
- 144: Ringauflage
- 145: Griffschlitz
- 200: Trägereinrichtung
- 201: Steckplatte
- 202: Steckbuchsen
- 300: Grundkörper, insbesondere Nutzen
- 301: Trennlinien, insbesondere Sollbruchstellen
- 302: Lötpad
- 303: elektrisch leitende Kontaktfläche
- 400: Vormontageanordnung

## Patentansprüche

1. Funktionsbaustein (100) für ein didaktisches Lehrmittel zur Vermittlung von Grundwissen in der Elektrotechnik/Elektronik, wobei ein oder mehrere Funktionsbausteine (100) auf einer Trägereinrichtung (200) für eine elektrische/elektronische Schaltung kombiniert oder kombinierbar sind und wobei der Funktionsbaustein (100) folgendes aufweist:
- mindestens eine Halteplatte (101) oder eine sonstige Haltevorrichtung,
- mindestens ein elektrischer/elektronischer Aufbau (110), wobei der oder die elektrischen/elektronischen Aufbauten (110) auf der Halteplatte (101) oder der sonstigen Haltevorrichtung angeordnet oder anordenbar sind,
- mindestens eine Kopplungseinrichtung (120) zum elektrisch leitenden Koppeln
∘ der Halteplatte (101) oder der sonstigen Haltevorrichtung
∘ und/oder des oder der elektrischen/elektronischen Aufbauten (110)
mit der Trägereinrichtung (200) und/oder einem weiteren Funktionsbaustein (100),
**dadurch gekennzeichnet, dass**
die Halteplatte (101) oder sonstige Haltevorrichtung elektrisch leitendes Material, integriert in und/oder eingebettet in und/oder aufgetragen auf ein nichtleitendes Trägermaterial, zum Ausbilden einer elektrisch leitenden Verbindung des oder der elektrischen/elektronischen Aufbauten (110) mit der Kopplungseinrichtung (120) und/oder mit der Halteplatte (101) oder der sonstigen Haltevorrichtung aufweist.

2. Funktionsbaustein (100) nach Anspruch 1,
**dadurch gekennzeichnet, dass**
die Halteplatte (101) oder sonstige Haltevorrichtung als oder mit einer Platine (101) ausgebildet ist.

3. Funktionsbaustein (100) nach Anspruch 1 oder 2,
**dadurch gekennzeichnet, dass**
die Halteplatte (101) oder sonstige Haltevorrichtung eine Bestückungsseite (102) zum Anordnen des oder der elektrischen/elektronischen Aufbauten (110) und eine Lötseite (103) zum Verlöten des oder der elektrischen/elektronischen Aufbauten (110) mit der Halteplatte (101) oder sonstigen Haltevorrichtung und/oder der Kopplungseinrichtung (120) aufweist.

4. Funktionsbaustein (100) nach einem der vorhergehenden Ansprüche, **dadurch gekennzeichnet, dass**
die Platine (101) Durchgänge (104) zum Durchführen der Kopplungseinrichtungen (120) aufweist.

5. Funktionsbaustein (100) nach einem der vorhergehenden Ansprüche, **dadurch gekennzeichnet, dass**
die Platine (101) in einem Rahmen (130) oder sonstigen Gehäuse angeordnet ist.

6. Rahmen (130) mit vorzugsweise quaderförmiger oder prismatischer Grundform, geeignet zur Aufnahme eines Funktionsbausteins (100), insbesondere eines Funktionsbausteins (100) nach einem der Ansprüche 1-5 für ein didaktisches Lehrmittel zur Vermittlung von Grundwissen in der Elektrotechnik/Elektronik, wobei ein oder mehrere Funktionsbausteine (100) auf einer Trägereinrichtung (200) für eine elektrische/elektronische Schaltung kombiniert oder kombinierbar sind und wobei der Funktionsbaustein (100) folgendes aufweist:
- mindestens ein elektrischer/elektronischer Aufbau (110),
- mindestens eine Kopplungseinrichtung (120) zum elektrisch leitenden Koppeln des oder der elektrischen/elektronischen Aufbauten (110) mit der Trägereinrichtung (200) und/oder einem weiteren Funktionsbaustein (100),
**dadurch gekennzeichnet, dass**
der Rahmen (130) an mindestens zwei gegenüberliegenden Wandungen, vorzugsweise deckungsgleiche, Ausnehmungen (142) aufweist.

7. Rahmen (130) nach Anspruch 6,
**dadurch gekennzeichnet, dass**
der Rahmen (130) als U-Profilträger ausgebildet ist, wobei der oder die elektrischen/elektronischen Aufbauten (110) ganz oder teilweise in einem Rahmenzwischenraum (138) angeordnet oder anordenbar sind, der durch einen U-Mittelabschnitt (131) und zwei U-Schenkel (132) des U-Profilträgers begrenzt ist.

8. Rahmen (130) nach einem der Ansprüche 6 oder 7,
**dadurch gekennzeichnet, dass**
der U-Mittelabschnitt (131) einen oder mehrere Durchgänge (135) zur lösbaren Montage eines Rahmenoberteils (136) mit dem Rahmen (130) oder dem sonstigen Gehäuse aufweist.

9. Rahmen (130) nach einem der Ansprüche 7 oder 8,
**dadurch gekennzeichnet, dass**
die U-Schenkel (132) des U-Profilträgers einen, vorzugsweise rechtwinklig, abgewinkelten Bereich (133) aufweisen und die abgewinkelten Bereiche (133) jeweils einen oder mehrere Durchgänge (134) zum Durchführen der Kopplungseinrichtungen (120) aufweisen.

10. Rahmen (130) nach einem der Ansprüche 6-9,
**dadurch gekennzeichnet, dass**
die Kopplungseinrichtung (120) des Funktionsbausteins (100) einen der Trägereinrichtung (200) zugeordneten Kopplungsabschnitt (121), einen dem elektrischen/elektronischen Aufbau (101) zugeordneten Befestigungsabschnitt (122) und einen dazwischenliegenden Mittelabschnitt (123) aufweist
und der Rahmen (130) eine Vertiefung (140) oder eine sonstige Einrichtung zur verdrehsicheren Aufnahme des Mittelabschnitts (123) aufweist.

11. Verfahren zum Herstellen eines Funktionsbausteins (100) für ein didaktisches Lehrmittel, insbesondere für ein didaktisches Lehrmittel zur Vermittlung von Grundwissen in der Elektrotechnik/Elektronik, wobei ein oder mehrere Funktionsbausteine (100) auf einer Trägereinrichtung (200) für eine elektrische/elektronische Schaltung kombiniert oder kombinierbar sind, insbesondere für einen Funktionsbaustein (100) nach einem der Ansprüche 1-5 und/oder mit einem Rahmen (130) nach einem der Ansprüche 6-10, **gekennzeichnet durch** folgende Schritte:
a) Bereitstellen mindestens einer Halteplatte (101) oder sonstigen Haltevorrichtung,
b) Anordnen von mindestens einem elektrischen/elektronischen Aufbau (110) auf der Halteplatte (101) oder sonstigen Haltevorrichtung,
c) Verbinden des oder der elektrischen/elektronischen Aufbauten (110) mit der Halteplatte (101) oder sonstigen Haltevorrichtung.

12. Herstellungsverfahren nach Anspruch 11,
**dadurch gekennzeichnet, dass**
während des Herstellungsverfahrens ein Grundkörper (300), insbesondere ein Nutzen, bereitgestellt wird, der mehrere zusammenhängende Halteplatten (101) oder sonstige Haltevorrichtungen aufweist.

13. Herstellungsverfahren nach einem der Ansprüche 11 oder 12,
**dadurch gekennzeichnet, dass**
das Verbinden des oder der elektrischen/elektronischen Aufbauten (110) mit der Halteplatte (101) oder sonstigen Haltevorrichtung durch einen Lötvorgang und/oder einen sonstigen Fügevorgang erfolgt.

14. Herstellungsverfahren nach einem der Ansprüche 11-13,
**dadurch gekennzeichnet, dass**
das Verbinden des oder der elektrischen/elektronischen Aufbauten (110) mit dem Grundkörper (300), der Halteplatte (101) oder der sonstigen Haltevorrichtung in einem Lötbad erfolgt.

15. Herstellungsverfahren nach einem der Ansprüche 11-14,
**dadurch gekennzeichnet, dass**
einem Verbinden des oder der elektrischen/elektronischen Aufbauten (110) mit der Halteplatte (101) oder sonstigen Haltevorrichtung eine Vormontageanordnung (400) durch Anordnen des oder elektrischen/elektronischen Aufbauten (110) auf dem Grundkörper (300) vorangeht.
